# EUROPÄISCHE PATENTSCHRIFT

(11) **EP 3 046 739 B1**
(45) Veröffentlichungstag und Bekanntmachung des Hinweises auf die Patenterteilung: **27.02.2019**
(21) Anmeldenummer: 14758338.9
(22) Anmeldetag: 27.08.2014
(51) Int. Cl.: B29B 15/12, C08J 5/04, D01F 9/12, B29K 307/00, B29K 307/04, D01F 9/22

(54) **VERFAHREN ZUR HERSTELLUNG EINES FASERVERBUNDHALBZEUGES**
METHOD FOR PRODUCING A FIBER-COMPOSITE SEMI-FINISHED PRODUCT
PROCÉDÉ PERMETTANT DE PRODUIRE UN DEMI-PRODUIT RENFORCÉ PAR DES FIBRES

(30) Priorität: 17.09.2013 DE 102013218639
(43) Veröffentlichungstag der Anmeldung: 27.07.2016
(73) Patentinhaber: Bayerische Motoren Werke Aktiengesellschaft, 80809 München (DE)
(72) Erfinder: DAUNER, Willy, 86368 Gersthofen (DE); HUBER, Stephan, 81925 München (DE); STARKE, Joachim, 81375 München (DE)
(86) Internationale Anmeldenummer: PCT/EP2014/068155
(87) Internationale Veröffentlichungsnummer: WO 2015/039845

(56) Entgegenhaltungen:
- EP-A1- 2 878 617
- WO-A1-2005/099985
- WO-A1-2006/061386
- WO-A1-2013/024025
- WO-A1-2013/086118
- WO-A2-98/06551
- GB-A- 1 315 716
- US-A- 4 140 832
- Hassan M. El-Dessouky ET AL: "Ultra-lightweight carbon fibre/thermoplastic composite material using spread tow technology", Composites Part B: Engineering, 13. Februar 2013 (2013-02-13), Seiten 91-97, XP055149395, DOI: 10.1016/j.compositesb.2013.01.026 Gefunden im Internet: URL:http://ac.els-cdn.com/S135983681300044 9/1-s2.0-S1359836813000449-main.pdf?_tid=0 2022d2a-5ea6-11e4-92f1-00000aacb35e&acdnat =1414502962_a3dc555fdea7ee7421e58f2957736d 21 [gefunden am 2014-10-28]

## Beschreibung

Die vorliegende Erfindung betrifft ein Verfahren zur Herstellung eines Faserverbundhalbzeuges, das Faserverbundhalbzeug umfassend Kohlenstofffasern und einen Matrixwerkstoff.

### STAND DER TECHNIK

In der modernen Technik kommen Faserverbundwerkstoffe universell zum Einsatz. Insbesondere ist die Verwendung von Faserverbundwerkstoffen mit Kohlenstofffasern und einem Matrixwerkstoff bekannt. Dieser bildet eine Verbindung zu den Kohlenstofffasern aus. Der Matrixwerkstoff kann dabei verschiedene Eigenschaften aufweisen, es kann beispielsweise ein thermoplastischer, duroplastischer oder elastomerer Matrixwerkstoff verwendet werden. Beispiele für Anwendungsgebiete derartiger Faserverbundwerkstoffe sind dabei unter anderem der Automobil-, Flugzeug- oder Schiffbau.

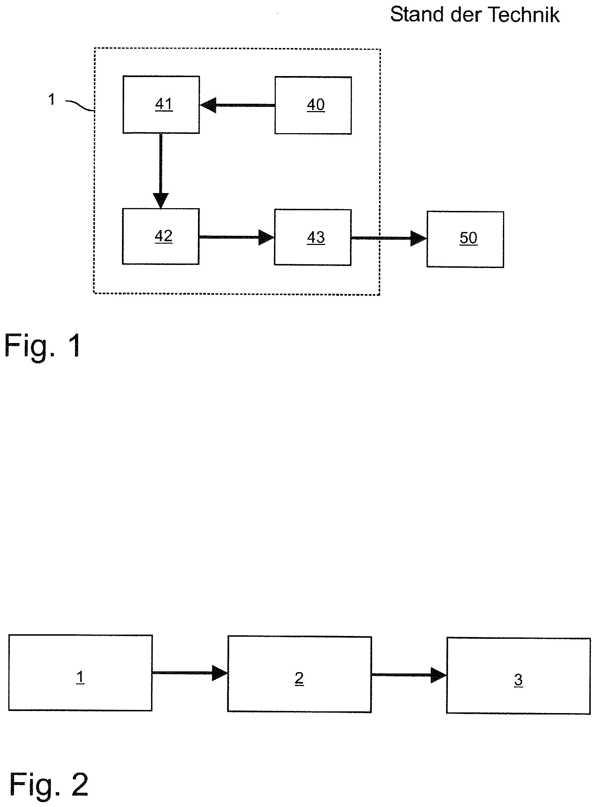

Die Herstellung von Kohlenstofffasern ist bekannt. Ein möglicher Ablauf einer derartigen Herstellung 1 ist schematisch in Fig. 1 gezeigt. Dabei werden aus einem Ausgangsmaterial zur Herstellung 1 von Kohlenstofffasern dünne Fasern mit Durchmessern von wenigen Mikrometern erzeugt. Als Ausgangsmaterial kann dabei beispielsweise Polyacrylnitril (PAN), Pech oder Lignin verwendet werden. Nach einem Oxidationsschritt 40 werden durch Karbonisierung 41 die Kohlenstofffasern erzeugt. Bei der Karbonisierung 41 können hohe Temperaturen, insbesondere Temperaturen über 1000°C, und eine Schutzgasatmosphäre eingesetzt werden. Nach dieser Karbonisierung 41 liegen somit die Kohlenstofffasern vor. Die Herstellung kann jedoch noch weitere Herstellungsschritte aufweisen, beispielsweise eine Oberflächenbehandlung 42. Hierbei können insbesondere die Oberflächen der Kohlenstofffasern derart behandelt werden, dass sie eine hohe Reaktivität aufweisen. Um die frisch hergestellten Fasern zu schützen, insbesondere um ein Verkleben der Fasern zu verhindern, und eine textile Weiterverarbeitung der Fasern zu ermöglichen, kann als letzter Herstellungsschritt in einer Schlichtebehandlung 43 eine Schlichte auf die Fasern aufgebracht werden. Dafür kann üblicherweise ein Schlichtebad verwendet werden. Für eine Lagerung beziehungsweise einen Transport für eine Weiterverarbeitung der Fasern ist es bekannt, diese im Anschluss an die Herstellung 1 auf Spulen aufzuwickeln 50.

Weiterhin sind Herstellungsverfahren von Faserverbundhalbzeugen beispielsweise aus der US 4140832 A, der GB 1315716 A oder EP 2878617 A1 bekannt.

Nachteilig hierbei hat sich herausgestellt, dass durch das Aufwickeln auf Spulen die Kohlenstofffasern geschädigt werden können. Derartige Schäden können sich beispielsweise in einer verminderten Steifigkeit und/oder Festigkeit des erzeugten Faserverbundwerkstoffs niederschlagen. Ferner kann bei einer Weiterverarbeitung der Kohlenstofffasern zu einem Faserverbundwerkstoff beziehungsweise zu einem Halbzeug aus Faserverbundwerkstoff (Faserverbundhalbzeug) die Verbindung zwischen den Kohlenstofffasern und bestimmten Matrixwerkstoffen durch die Schlichte auf den Kohlenstofffasern negativ beeinflusst werden. Eine Faser-Matrix-Verbindung des erzeugten Faserverbundwerkstoffs kann dadurch insgesamt verringert sein.

### OFFENBARUNG DER ERFINDUNG

Es ist daher Aufgabe der vorliegenden Erfindung, die voranstehend beschriebenen Nachteile bei einem Verfahren zur Herstellung eines Faserverbundhalbzeuges zumindest teilweise zu beheben. Insbesondere ist es Aufgabe der vorliegenden Erfindung, ein Verfahren zur Herstellung eines Faserverbundhalbzeuges zu schaffen, das es auf eine einfache und kostengünstige Art und Weise ermöglicht, ein Faserverbundhalbzeug mit erhöhter Performance, vor allem hinsichtlich einer besseren Faser-Matrix-Verbindung, einer besseren Steifigkeit, einer besseren Festigkeit und/oder eines verminderten Faserauszuges, herzustellen.

Voranstehende Aufgabe wird gelöst durch ein Verfahren zur Herstellung eines Faserverbundhalbzeuges mit den Merkmalen des unabhängigen Anspruchs 1. Weitere Merkmale und Details der Erfindung ergeben sich aus den Unteransprüchen, der Beschreibung und den Zeichnungen. Dabei gelten Merkmale und Details, die im Zusammenhang mit dem Verfahren beschrieben sind, selbstverständlich auch im Zusammenhang mit dem offenbarten Faserverbundhalbzeug und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch ein Verfahren zur Herstellung eines Faserverbundhalbzeuges, das Faserverbundhalbzeug umfassend Kohlenstofffasern und einen Matrixwerkstoff, gelöst. Insbesondere ist das erfindungsgemäße Verfahren durch folgende Schritte gekennzeichnet:
a) Herstellung der Kohlenstofffasern und
b) Aufbringen des Matrixwerkstoffs auf die unveränderten Kohlenstofffasern.

Im Schritt a) des erfindungsgemäßen Verfahrens werden die Kohlenstofffasern hergestellt. Dabei kann eine Herstellung von Kohlenstofffasern im Sinne der Erfindung bereits nach einer Karbonisierung abgeschlossen sein. Alternativ können jedoch auch eine Oberflächenbehandlung und/oder eine Schlichtebehandlung noch als weiter(e) Schritt(e) der Herstellung der Kohlenstofffasern durchgeführt werden. Bedingt durch das angewandte Herstellungsverfahren, bei dem ein Ausgangsmaterial wie beispielsweise Polyacrylnitril (PAN), Pech oder Lignin zur Herstellung von Kohlenstofffasern eingesetzt werden kann, können die Kohlenstofffasern aktiviert sein. Dies bedeutet, dass diese eine hohe Oberflächenspannung aufweisen und somit sehr reaktiv sind.

Im Gegensatz zu den Verfahren des Standes der Technik wird nach der Herstellung der Kohlenstofffasern kein Aufspulen der hergestellten Kohlenstofffasern durchgeführt. Stattdessen ist im Schritt b) erfindungsgemäß ein Aufbringen des Matrixwerkstoffs auf die unveränderten Kohlenstofffasern vorgesehen ist. Unverändert im Sinne der Erfindung bedeutet dabei insbesondere, dass erfindungsgemäß kein weiterer Verarbeitungsschritt zwischen der Herstellung der Kohlenstofffasern und dem Aufbringen des Matrixwerkstoffes vorgenommen wird. Somit wird der Matrixwerkstoff je nach durchgeführtem Herstellungsprozess beispielsweise nach einer Karbonisierung, einer Oberflächenbehandlung oder einer Schlichtebehandlung auf die Kohlenstofffasern aufgebracht. Ein Aufspulen der hergestellten Fasern für eine Lagerung oder einen Transport, bei dem die Fasern geschädigt werden können, kann so vermieden werden. Auch können insbesondere nach einer Oberflächenbehandlung die Kohlenstofffasern aktiviert sein wodurch die Anbindung der Kohlenstofffasern an den Matrixwerkstoff dadurch deutlich verbessert werden kann. Als Matrixwerkstoff können dabei sowohl Thermoplaste als auch Duroplaste oder Elastomere verwendet werden. Durch die Weiterverarbeitung der unveränderten Kohlenstofffasern ist ein Aufspulen der Kohlenstofffasern nach der Herstellung für eine Lagerung beziehungsweise einen Transport der Fasern nicht notwendig. Schädigungen der Kohlenstofffasern durch ein derartiges Aufspulen können somit vermieden werden. Ein derartig hergestelltes Faserverbundhalbzeug weist somit insbesondere durch das Vermeiden einer Schädigung durch das Aufspulen der Kohlenstofffasern nach ihrer Herstellung eine gesteigerte Performance auf. Eine gesteigerte Performance des Faserverbundhalbzeugs umfasst dabei beispielsweise eine bessere Anbindung der Kohlenstofffasern an den Matrixwerkstoff, eine erhöhte Steifigkeit oder Festigkeit des Faserverbundhalbzeugs und/oder eine Verringerung eines Faserauszuges aus dem Faserverbundhalbzeug. Bei einer Imprägnierung nach einem Aufbringen einer Schlichte in einer Schlichtebehandlung kann insbesondere auch die Haltbarkeit von derart hergestellten Kohlenstofffasern deutlich verlängert werden.

Ein durch ein erfindungsgemäßes Verfahren hergestelltes Faserverbundhalbzeug kann dabei insbesondere als Tape, Band oder Faserbündel (Tow) vorliegen. Insbesondere bei der Herstellung eines Tapes oder Bandes kann dabei zusätzlich vorteilhafterweise genutzt werden, dass die Kohlenstofffasern nach ihrer Herstellung bereits gespreizt vorliegen, das heißt dass sie nebeneinander angeordnet sind. Ein Tape oder Band, insbesondere ein Tape oder Band mit unidirektional angeordneten Kohlenstofffasern, kann dadurch besonders einfach durch Aufbringen des Matrixwerkstoffs in Schritt b) des erfindungsgemäßen Verfahrens hergestellt werden. Ein aufwendiges, nachträgliches Aufspreizen zusammengefügter Kohlenstofffasern kann dadurch vermieden werden. Durch den Einsatz eines erfindungsgemäßen Verfahrens ist es dadurch insgesamt möglich, eine Herstellung eines Faserverbundhalbzeuges schneller und kostengünstiger durchzuführen, wobei zusätzlich die Performance des Faserverbundhalbzeuges gesteigert ist.

Gemäß einer bevorzugten Weiterentwicklung eines erfindungsgemäßen Verfahrens kann es vorgesehen sein, dass Schritt b) direkt anschließend an Schritt a) durchgeführt wird. Auf diese Weise kann besonders einfach sichergestellt werden, dass die Kohlenstofffasern beim Aufbringen des Matrixwerkstoffs in Schritt b) des erfindungsgemäßen Verfahrens unverändert sind. Insbesondere können durch das direkte Anschließen des Schritts b) an den Schritt a) und der damit verbundenen Minimierung der Zeit zwischen den beiden Schritten Reaktionen der aktivierten Kohlenstofffasern mit der Umgebung, zum Beispiel mit der Umgebungsluft, verhindert oder zumindest deutlich unterdrückt werden.

Darüber hinaus kann ein erfindungsgemäßes Verfahren dadurch gekennzeichnet sein, dass ein thermoplastischer und/oder duroplastischer und/oder elastomerer Matrixwerkstoff verwendet wird und beim Aufbringen des Matrixwerkstoffs in Schritt b) eine Schmelzimprägnierung verwendet wird. Insbesondere sind die verwendeten Matrixwerkstoffe dabei Kunststoffe, die bei genügend hoher Wärmezufuhr in einen schmelzflüssigen Zustand übergehen und in diesem verformbar sind. Durch die Verwendung derartiger Matrixwerkstoffe kann so ein Faserverbundhalbzeug hergestellt werden, das ebenfalls unter geeignet großer Wärmezufuhr plastisch verformbar ist. Dieser Vorgang ist insbesondere darüber hinaus beispielsweise bei thermoplastischen Matrixwerkstoffen reversibel, das heißt, nach einer Abkühlung ist das thermoplastische Material wieder fest, kann aber durch erneute Erwärmung wieder in einen verformbaren Zustand gebracht werden. Eine Schmelzimprägnierung, bei der der thermoplastische und/oder duroplastische und/oder elastomere Matrixwerkstoff in seinem schmelzflüssigen Zustand vorliegt, stellt eine besonders einfache Weise dar, einen Matrixwerkstoff auf die Kohlenstofffasern aufzubringen. Dabei kann beispielsweise der aufgeschmolzene thermoplastische und/oder duroplastische und/oder elastomere Matrixwerkstoff den Kohlenstofffasern zugeführt werden, wodurch eine Imprägnierung der Kohlenstofffasern durch den Matrixwerkstoff erreicht werden kann. Dabei ist insbesondere von Vorteil, dass keine weiteren Materialien, wie beispielsweise Lösungsmittel, benötigt werden und dass eine hohe Prozessgeschwindigkeit bei der Imprägnierung erreicht werden kann.

Darüber hinaus kann in einer Weiterentwicklung eines erfindungsgemäßen Verfahrens vorgesehen sein, dass in Schritt b) thermoplastischer Matrixwerkstoff durch einen Extruder, insbesondere einem Extruder mit einer Breitschlitzdüse, zur Schmelzimprägnierung bereitgestellt wird. Ein Extruder kann den thermoplastischen Matrixwerkstoff gleichmäßig mit insbesondere hohem Druck und hoher Temperatur bereitstellen. Eine besonders gleichmäßige Schmelzimprägnierung der Kohlenstofffasern mit dem thermoplastischen Matrixwerkstoff kann dadurch erreicht werden. Durch eine Breitschlitzdüse ist dies darüber hinaus über eine lineare Ausdehnung von mehreren Zentimetern, insbesondere mehreren Dezimetern, möglich. Dies ist insbesondere bei der Herstellung eines Faserverbundhalbzeuges in Form eines Tapes oder eines Bandes besonders vorteilhaft.

Alternativ kann in einer Weiterentwicklung eines erfindungsgemäßen Verfahrens dahingehend ausgestaltet sein, dass in Schritt b) duroplastischer Matrixwerkstoff durch eine Mischanlage bereitgestellt wird. Eine Mischanlage stellt dabei eine besonders einfache Vorrichtung dar, einen duroplastischen Matrixwerkstoff bereitzustellen. In der Mischanlage können dabei insbesondere die Bestandteile des duroplastischen Matrixwerkstoffes, beispielsweise ein Harz- und ein Härtermaterial, miteinander vermischt werden. Durch die Mischanlage kann dabei insbesondere ein besonders homogen gemischter duroplastischer Matrixwerkstoff bereitgestellt werden. Dadurch, insbesondere durch eine üblicherweise sehr geringe Viskosität des von der Mischanlage bereitgestellten, noch nicht ausreagierten, Gemisches, kann eine besonders gleichmäßige Imprägnierung der Kohlenstofffasern mit dem duroplastischen Matrixwerkstoff bereits bei geringen Drücken erreicht werden.

In einer weiteren alternativen Ausgestaltungsform kann ein erfindungsgemäßes Verfahren dahingehend ausgebildet sein, dass beim Aufbringen des Matrixwerkstoffs in Schritt b) eine Pulverimprägnierung verwendet wird. Dabei liegt der Matrixwertstoff in Pulverform vor und wird mit den unveränderten Kohlenstofffasern in Kontakt gebracht. Dies kann beispielsweise durch Aufstreuung des Pulvers erfolgen. Durch die hohe Reaktivität der Kohlenstofffasern kann dabei bereits eine Imprägnierung erfolgen. Auch ist selbstverständlich möglich, nur auf einen Teil der Kohlenstofffasern den pulverförmigen Matrixwerkstoff aufzubringen. Durch diese Bebinderung der Kohlenstofffasern kann dabei insbesondere erreicht werden, dass nur die Lage der Kohlenstofffasern zueinander fixiert wird. Selbstverständlich kann das Pulver, alternativ oder zusätzlich, auch durch Wärmezufuhr an die Kohlenstofffasern zur Imprägnierung angeschmolzen werden und/oder durch Druck mit den Kohlenstofffasern zur Imprägnierung verpresst werden. Insbesondere für Matrixwerkstoffe, für die kein geeignetes Lösungsmittel zur Verfügung steht, stellt somit die Pulverimprägnierung eine besonders geeignete Möglichkeit einer Anordnung des Matrixwerkstoffes an den unveränderten Kohlenstofffasern dar.

Auch kann alternativ bei einem erfindungsgemäßen Verfahren vorgesehen sein, dass beim Aufbringen des Matrixwerkstoffs in Schritt b) eine Folienimprägnierung verwendet wird. Dabei werden die unveränderten Kohlenstofffasern auf Folien aufgebracht, die den Matrixwerkstoff umfassen oder aus diesem bestehen. Die aktivierten Kohlenstofffasern verbinden sich im Anschluss durch ihre hohe Reaktionsfähigkeit mit dem Matrixwerkstoff, wobei dieser Prozess selbstverständlich durch beispielsweisen ein Erhitzen, ein Verpressen oder Ähnliches in vielen Fällen noch unterstützt wird beziehungsweise werden kann. Insbesondere für Faserverbundhalbzeuge mit großer Breitenausdehnung, zum Beispiel bei Tapes oder Bändern, stellt dies eine einfache Art und Weise des Aufbringens des Matrixwerkstoffes dar, da die Folie beispielsweise bereits die Breite des herzustellenden Faserverbundhalbzeuges aufweisen kann.

In einer Weiterentwicklung eines erfindungsgemäßen Verfahrens kann ferner vorgesehen sein, dass in Schritt b) für ein Aufschmelzen des Matrixwerkstoffs eine in Schritt a) bei der Herstellung der Kohlenstofffasern entstandene Abwärme verwendet wird. Bei der Herstellung der Kohlenstofffasern entsteht Abwärme, insbesondere bei dem Herstellungsschritt der Karbonisierung. Diese Abwärme kann verwendet werden, um den Matrixwerkstoff als Vorbereitung der Imprägnierung aufzuschmelzen. Die Verwendung der vorhandenen Abwärme für diesen Aufschmelzvorgang hat dabei insbesondere den Vorteil, dass eine zusätzliche Wärmequelle nicht oder nur mehr in geringerem Ausmaß nötig ist. Dadurch können Energie und damit Kosten eingespart und die Umwelt geschont werden.

Besonders bevorzugt kann ein erfindungsgemäßes Verfahren dahingehend weiterentwickelt werden, dass die Abwärme zumindest teilweise durch die Kohlenstofffasern bereitgestellt wird. Die Kohlenstofffasern können direkt nach dem Herstellungsschritt der Karbonisierung hohe Temperaturen, insbesondere Temperaturen deutlich über 1000°C, aufweisen. Diese in den Kohlenstofffasern selbst gespeicherte Abwärme kann genutzt werden, um den verwendeten Matrixwerkstoff zumindest teilweise aufzuschmelzen. Aufwendige Transportsysteme für die Abwärme von der Herstellung der Kohlenstofffasern zum Ort der Imprägnierung können so eingespart oder zumindest kleiner dimensioniert werden. Dies wiederum stellt eine Kostenersparnis bei der Herstellung eines Faserverbundhalbzeuges dar.

Alternativ kann ein erfindungsgemäßes Verfahren dahingehend ausgestaltet sein, dass beim Aufbringen des Matrixwerkstoffs in Schritt b) eine Lösungsmittelimprägnierung verwendet wird. Dabei können insbesondere thermoplastische, duroplastische oder elastomere Matrixwerkstoffe verwendet werden. Bevorzugt wird dabei der Matrixwerkstoff im Lösungsmittel gelöst und zusammen mit diesem auf die Kohlenstofffasern aufgebracht. Nach einem Verdampfen des Lösungsmittels verbleibt der Matrixwerkstoff auf den Kohlenstofffasern und imprägniert diese. Eine Lösungsmittelimprägnierung stellt somit eine besonders vielseitige, insbesondere hinsichtlich der Breite der einsetzbaren Matrixwerkstoffe, Möglichkeit eines Aufbringens des Matrixwerkstoffs dar.

Bevorzugt kann dabei in einer Weiterentwicklung eines erfindungsgemäßen Verfahrens vorgesehen sein, dass bei der Lösungsmittelimprägnierung in Schritt b) ein Tauchbad verwendet wird. Im Tauchbad liegt der Matrixwerkstoff in gelöster Form im Lösungsmittel vor. Die unveränderten Kohlenstofffasern werden dem Tauchbad zugeführt und dadurch durch das Lösungsmittel-Matrixwerkstoff-Gemisch benetzt. Dies stellt eine besonders einfache und wirtschaftliche Art und Weise der Lösungsmittelimprägnierung dar, da insbesondere überschüssiger Matrixwerkstoff, der an den Kohlenstofffasern nicht anordenbar ist, im Tauchbad verbleibt und somit nicht verloren geht.

Darüber hinaus kann ein erfindungsgemäßes Verfahren dahingehend ausgebildet sein, dass nach Schritt b) in einem Schritt c) das Faserverbundhalbzeug abgelegt, insbesondere aufgewickelt, wird. Nach Schritt b) und einer eventuellen Abkühl-, Trocknungs- und/oder Aushärtungszeit ist das Faserverbundhalbzeug bereit für die Weiterverarbeitung. Auch können, beispielsweise durch Textilverarbeitungsschritte, verschiedene Formen von Faserverbundhalbzeugen erzeugt werden. Für eine bessere Transportierbarkeit kann deshalb vorgesehen sein, das Faserverbundhalbzeug abzulegen. Je nach Art und Form des Faserverbundhalbzeuges, das beispielsweise als Granulat, Faserbündel (Tow), Tape, flächiges Gelege oder flächiges Gewebe vorliegen kann, kann dabei vorgesehen sein, insbesondere bei Faserbündeln oder Bändern, diese auf eine Spule aufzuwickeln. Nach Schritt b) ist der Matrixwerkstoff auf die Kohlenstofffasern aufgebracht, die Kohlenstofffasern sind, zumindest teilweise, imprägniert. Eine Reaktion, insbesondere ein Verkleben, der einzelnen Kohlenstofffasern untereinander ist nicht mehr zu erwarten. Ein Ablegen, insbesondere ein Aufwickeln, stellt somit eine besonders einfache Art und Weise dar, ein nach einem erfindungsgemäßen Verfahren hergestelltes Faserverbundhalbzeug für einen Transport zu seinem Weiterverarbeitungsort vorzubereiten.

Weiterhin wird ein Faserverbundhalbzeug offenbart, das Faserverbundhalbzeug umfassend Kohlenstofffasern und einen Matrixwerkstoff. Insbesondere ist ein Faserverbundhalbzeug dadurch gekennzeichnet, dass das Faserverbundhalbzeug durch ein Verfahren gemäß dem ersten Aspekt der Erfindung hergestellt ist. Sämtliche Vorteile, die zu einem Verfahren zur Herstellung eines Faserverbundhalbzeuges gemäß dem ersten Aspekt der Erfindung beschrieben worden sind, ergeben sich somit selbstverständlich auch für ein Faserverbundhalbzeug, das durch ein derartiges Verfahren hergestellt ist

Gemäß einer besonders bevorzugen Ausgestaltung eines Faserverbundhalbzeugs kann ferner vorgesehen sein, dass das Faserverbundhalbzeug aus Kohlenstofffasern und einen Matrixwerkstoff besteht. Der Matrixwerkstoff wurde somit im erfindungsgemäßen Verfahren gemäß dem ersten Aspekt der Erfindung direkt auf die Kohlenstofffasern aufgebracht, beispielsweise nach der Karbonisierung oder einer Oberflächenbehandlung. Eine Schlichtebehandlung wurde nicht vorgenommen. Dadurch kann zum einen ein Kostenvorteil erreicht werden, da das Faserverbundhalbzeug schneller und ohne den Einsatz einer Schlichte hergestellt werden kann. Zudem weist ein derartiges Faserverbundhalbzeug durch das Fehlen der Schlichte auch ein geringeres Gewicht auf. Zum anderen kann durch das direkte Aufbringen des Matrixwerkstoffes auf die Kohlenstofffasern, insbesondere beispielsweise bei einem Aufbringen direkt nach der Karbonisierung oder einer Oberflächenbehandlung, eine besonders gute Verbindung zwischen den Kohlenstofffasern und dem Matrixwerkstoff erreicht werden. Dadurch können Faserverbundhalbzeuge mit besonders hoher Performance erzeugt werden.

### BEVORZUGTE AUSFÜHRUNGSBEISPIELE

Das erfindungsgemäße Verfahren sowie das offenbarte Faserverbundhalbzeug und deren Weiterbildungen sowie deren Vorteile werden nachfolgend anhand von Zeichnungen näher erläutert. Es zeigen jeweils schematisch:
- Figur 1: Bereitstellung von Kohlenstofffasern gemäß dem Stand der Technik
- Figur 2: eine Ausgestaltungsform eines erfindungsgemäßen Verfahrens und
- Figur 3a und 3b: zwei Ansichten einer Vorrichtung zum Ausführen einer Ausgestaltungsform eines erfindungsgemäßen Verfahrens.

Elemente mit gleicher Funktion und Wirkungsweise sind in den Fig. 1, 2, 3a und 3b jeweils mit denselben Bezugszeichen versehen.

In Fig. 2 ist schematisch eine Ausgestaltungsform eines erfindungsgemäßen Verfahrens abgebildet. In Schritt a) 1 werden Kohlenstofffasern 10 (nicht abgebildet) hergestellt. Dabei wird insbesondere eine Karbonisierung 41 (nicht abgebildet) eingesetzt. In dieser wird ein Ausgangsmaterial zur Herstellung von Kohlenstofffasern, insbesondere auf über 1000°C, erhitzt, wodurch sich Fasern 10 aus graphitartig angeordnetem Kohlenstoff bilden. Auch eine Oberflächenbehandlung 42 und/oder eine Schlichtebehandlung 43 (nicht abgebildet) können Teilschritte der Herstellung 1 der Kohlenstofffasern 10 sein. Die Herstellung 1 der Kohlenstofffasern kann somit im Sinne der Erfindung bereits nach der Karbonisierung 41 abgeschlossen sein oder alternativ zusätzlich noch eine Oberflächenbehandlung 42 und/oder eine Schlichtebehandlung 43 umfassen. Die Kohlenstofffasern 10 können dabei nach der Herstellung 1 insbesondere aktiviert sein, das heißt, sie weisen eine hohe Oberflächenspannung und dadurch eine gesteigerte Reaktivität auf. Dies wird in Schritt b) 2 des erfindungsgemäßen Verfahrens ausgenutzt, in dem ein Matrixwerkstoff 11 (nicht abgebildet) auf die unveränderten Kohlenstofffasern 10 aufgebracht wird. Unverändert bedeutet dabei im Sinne der Erfindung insbesondere, dass zwischen Herstellung 1 der Kohlenstofffasern 10 und Aufbringen 2 des Matrixwerkstoffs 11 kein weiterer Verarbeitungsschritt durchgeführt wird. Die Anbindung des Matrixwerkstoffs 11 an die aktivierten Kohlenstofffasern 10 ist dadurch besonders effizient, wodurch ein besonders stabiles Faserverbundhalbzeug 12 (nicht abgebildet) hergestellt werden kann. Mögliche Schädigungen der Kohlenstofffasern 10, die bei einem Aufwickeln der Fasern vor der Weiterverarbeitung zu Faserverbundhalbzeugen 12 auftreten können, werden so vermieden. Bevorzugt kann dabei Schritt b) 2 des Verfahrens, das Aufbringen 2 des Matrixwerkstoffs 11 auf die Kohlenstofffasern 10, direkt anschließend an Schritt a) 1, die Herstellung 1 der Kohlenstofffasern 10 durchgeführt werden. Dies ermöglicht beispielsweise eine Nutzung der Abwärme der Herstellung 1 der Kohlenstofffasern 10, die durch diese selbst bereitgestellt werden kann und zum Aufschmelzen eines Matrixwerkstoffs 11 verwendet werden kann. Im Anschluss an Schritt b) 2 kann das hergestellte Faserverbundhalbzeug 12 noch in einem optionalen Schritt c) 3 abgelegt werden, beispielsweise auf eine Wickelrolle 23 (nicht abgebildet) aufgewickelt werden. Dadurch kann beispielsweise der Transport des hergestellten Faserverbundhalbzeuges 12 zu seinem Weiterverarbeitungsort erleichtert werden.

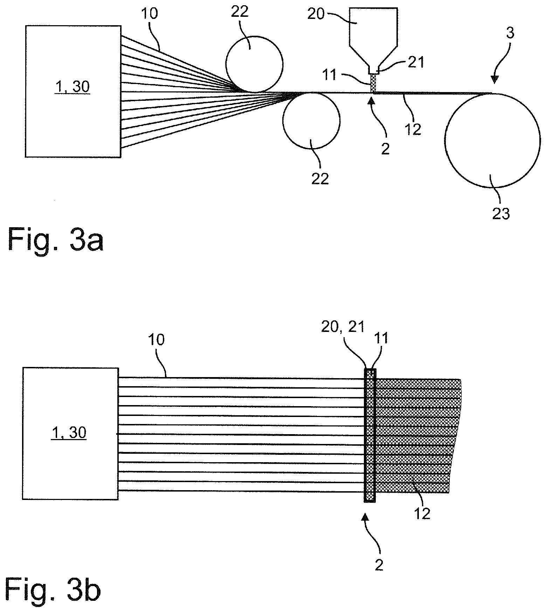

Fig. 3a und 3b zeigen zwei Ansichten einer Vorrichtung zum Ausführen einer Ausgestaltungsform eines erfindungsgemäßen Verfahrens. In der gezeigten Vorrichtung wird ein als Tape ausgebildetes Faserverbundhalbzeug 12 aus Kohlenstofffasern 10 und einem thermoplastischen Matrixwerkstoff 11 hergestellt. Selbstverständlich sind die beschriebenen Eigenschaften und Vorteile des erfindungsgemäßen Verfahrens auch auf andere Arten und/oder Formen des Faserverbundhalbzeuges 12 übertragbar. Dabei ist in Fig. 2a eine Seitenansicht, in Fig. 2b eine Draufsicht der Vorrichtung abgebildet. In einer Kohlenstofffaserquelle 30 wird der Schritt a) 1 des erfindungsgemäßen Verfahrens, das Herstellen 1 der Kohlenstofffasern 10, durchgeführt. Dabei können beispielsweise durch Karbonisierung aus einem Ausgangsmaterial zur Herstellung von Kohlenstofffasern derartige Kohlenstofffasern 10 mit graphitartig angeordnetem Kohlenstoff hergestellt werden. Insbesondere in Fig. 3b ist deutlich sichtbar, dass die Kohlenstofffasern 10, bedingt durch ihre Herstellung 1, bereits gespreizt vorliegen, das heißt, sie sind nebeneinander angeordnet. Die Herstellung eines Faserverbundhalbzeuges 12, das als Tape oder Band mit unidirektional angeordneten Kohlenstofffasern 10 ausgebildet ist, ist dadurch deutlich vereinfacht. Ein nachträgliches Aufspreizen der Kohlenstofffasern 10 vor der Herstellung des Faserverbundhalbzeuges 12 ist nicht nötig. Lediglich Umlenkrollen 22 (nur in Fig. 2a abgebildet) werden eingesetzt, um die Kohlenstofffasern 10 zu Herstellung des als Tape ausgebildeten Faserverbundhalbzeuges 12 planar in einer Ebene anzuordnen. Die Kohlenstofffasern 10 liegen nach ihrer Herstellung 1 aktiviert vor. Dies bedeutet, dass sie eine hohe Oberflächenspannung aufweisen und dadurch sehr reaktiv sind. Dies wird dahingehend ausgenützt, dass auf die unveränderten, das heißt keinem weiteren Verarbeitungsschritt unterzogenen, Kohlenstofffasern 10 unmittelbar anschließend in Schritt b) 2 des erfindungsgemäßen Verfahrens ein Matrixwerkstoff 11 aufgebracht wird. Eine Anbindung des Matrixwerkstoffs 11 an die Kohlenstofffasern 10 ist dadurch besonders effektiv. Das resultierende Faserverbundhalbzeug 12 erhält dadurch eine besonders hohe Performance. Für das Aufbringen 2 des Matrixwerkstoffs 11 wird in der gezeigten Vorrichtung ein Extruder 20 eingesetzt. Durch einen Extruder 20 ist insbesondere eine besonders gleichmäßige Bereitstellung des thermoplastischen Matrixwerkstoffes 11 bei gleichzeitig hohen Temperaturen und hohem Druck ermöglicht. Der Extruder 20 weist eine Breitschlitzdüse 21 auf, wie besonders in Fig. 2b gezeigt ist. Dadurch ist es möglich, gleichmäßig über die gesamte Breite des herzustellenden Faserverbundhalbzeuges 12 den Matrixwerkstoff 11 auf die Kohlenstofffasern 10 aufzubringen. Selbstverständlich ist es auch möglich, nur auf einen Teil der Breite des herzustellenden Faserverbundhalbzeuges 12 den Matrixwerkstoff 11 auf die Kohlenstofffasern 10 aufzubringen. Durch diese insbesondere direkt an die Herstellung 1 anschließende Aufbringung 2 des Matrixwerkstoffs 11 ist darüber hinaus auch eine Nutzung der Abwärme der Herstellung 1 der Kohlenstofffasern 10 ermöglicht, wobei die Abwärme insbesondere durch die Kohlenstofffasern 10 selbst bereitgestellt werden kann. Besonders in der gezeigten Ausgestaltungsform, in der ein thermoplastischer Matrixwerkstoff 11 eingesetzt wird, können dadurch Energie und somit auch Kosten eingespart werden. Nach dem Aufbringen 2 des Matrixwerkstoffes 11 wird in der gezeigten Ausbildungsform das Faserverbundhalbzeug 12 in einem weiteren Schritt c) 3 abgelegt, insbesondere auf eine Wickelrolle 23 aufgewickelt. Dies ist hier nur schematisch dargestellt, selbstverständlich ist vor dem Aufwickeln 3 eine Abkühlung, Trocknung und/oder Aushärtung des hergestellten Faserverbundhalbzeuges möglich. Zusammenfassend kann durch ein erfindungsgemäßes Verfahren ein Faserverbundhalbzeug 12 zur Verfügung gestellt werden, dass sich durch eine kürzere und dadurch kostengünstigere Prozesskette in der Herstellung und durch eine bessere Anbindung des Matrixwerkstoffs 11 an die Kohlenstofffasern 10 auszeichnet.

### Bezugszeichenliste

- 1: Schritt a), Herstellung der Kohlenstofffasern
- 2: Schritt b), Aufbringen des Matrixwerkstoffes
- 3: Schritt c), Ablegen des Faserverbundhalbzeuges

- 10: Kohlenstofffasern
- 11: Matrixwerkstoff
- 12: Faserverbundhalbzeug

- 20: Extruder
- 21: Breitschlitzdüse
- 22: Umlenkrolle
- 23: Wickelrolle

- 30: Kohlenstofffaserquelle

- 40: Oxidation
- 41: Karbonisierung
- 42: Oberflächenbehandlung
- 43: Schlichtebehandlung

- 50: Aufspulen

## Patentansprüche

1. Verfahren zur Herstellung eines Faserverbundhalbzeuges (12), das Faserverbundhalbzeug (12) umfassend Kohlenstofffasern (10) und einen Matrixwerkstoff (11), wobei das Faserverbundhalbzeug (12) als ein Tape, Band oder Faserbündel (Tow) vorliegt, **gekennzeichnet durch folgende Schritte:**
a) Herstellung der Kohlenstofffasern (10) und
b) Aufbringen des Matrixwerkstoffs (11) auf die unveränderten Kohlenstofffasern (10), wobei Schritt b) (2) direkt anschließend ohne einen weiteren Verarbeitungsschritt an Schritt a) (1) durchgeführt wird.

2. Verfahren nach Anspruch 1, **dadurch gekennzeichnet, dass** ein thermoplastischer und/oder duroplastischer und/oder elastomerer Matrixwerkstoff (11) verwendet wird und beim Aufbringen des Matrixwerkstoffs (11) in Schritt b) (2) eine Schmelzimprägnierung verwendet wird.

3. Verfahren nach Anspruch 2, **dadurch gekennzeichnet, dass** in Schritt b) (2) thermoplastischer Matrixwerkstoff (11) durch einen Extruder (20), insbesondere einem Extruder (20) mit einer Breitschlitzdüse (21), zur Schmelzimprägnierung bereitgestellt wird.

4. Verfahren nach Anspruch 2, **dadurch gekennzeichnet, dass** in Schritt b) (2) duroplastischer Matrixwerkstoff (11) durch eine Mischanlage bereitgestellt wird.

5. Verfahren nach Anspruch 1, **dadurch gekennzeichnet, dass** beim Aufbringen des Matrixwerkstoffs (11) in Schritt b) (2) eine Pulverimprägnierung verwendet wird.

6. Verfahren nach Anspruch 1, **dadurch gekennzeichnet, dass** beim Aufbringen des Matrixwerkstoffs (11) in Schritt b) (2) eine Folienimprägnierung verwendet wird.

7. Verfahren nach einem der Ansprüche 2 bis 6, **dadurch gekennzeichnet, dass** in Schritt b) (2) für ein Aufschmelzen des Matrixwerkstoffs (11) eine in Schritt a) (1) bei der Herstellung (1) der Kohlenstofffasern (10) entstandene Abwärme verwendet wird.

8. Verfahren nach Anspruch 78, **dadurch gekennzeichnet, dass** die Abwärme zumindest teilweise durch die Kohlenstofffasern (10) bereitgestellt wird.

9. Verfahren nach Anspruch 1, **dadurch gekennzeichnet, dass** beim Aufbringen des Matrixwerkstoffs (11) in Schritt b) (2) eine Lösungsmittelimprägnierung verwendet wird.

10. Verfahren nach Anspruch 9, **dadurch gekennzeichnet, dass** bei der Lösungsmittelimprägnierung in Schritt b) (2) ein Tauchbad verwendet wird.

11. Verfahren nach einem der vorangegangenen Ansprüche, **dadurch gekennzeichnet, dass** nach Schritt b) (2) in einem Schritt c) (3) das Faserverbundhalbzeug (12) abgelegt, insbesondere aufgewickelt, wird.

## Claims

1. A method for producing a semi-finished fibre-composite product (12), the semi-finished fibre-composite product (12) comprising carbon fibres (10) and a matrix material (11), wherein the semi-finished fibre-composite product (12) is present as a tape, band or fibre bundle (tow), **characterised by the following steps:**
a) producing the carbon fibres (10), and
b) applying the matrix material (11) to the unchanged carbon fibres (10), wherein step b) (2) is carried out directly following step a) (1) without a further processing step.

2. A method according to Claim 1, **characterised in that** a thermoplastic and/or thermoset and/or elastomer matrix material (11) is used and melt impregnation is used when applying the matrix material (11) in step b) (2).

3. A method according to Claim 2, **characterised in that** in step b) (2) thermoplastic matrix material (11) is made available for melt impregnation through an extruder (20), in particular an extruder (20) with a slot die (21).

4. A method according to Claim 2, **characterised in that** in step b) (2) thermoset matrix material (11) is made available through a mixing unit.

5. A method according to Claim 1, **characterised in that** powder impregnation is used when applying the matrix material (11) in step b) (2).

6. A method according to Claim 1, **characterised in that** film impregnation is used when applying the matrix material (11) in step b) (2).

7. A method according to one of Claims 2 to 6, **characterised in that** in step b) (2) waste heat produced in step a) (1) in the production (1) of the carbon fibres (10) is used for melting the matrix material (11).

8. A method according to Claim 7, **characterised in that** the waste heat is made available at least partly by the carbon fibres (10).

9. A method according to Claim 1, **characterised in that** solvent impregnation is used when applying the matrix material (11) in step b) (2).

10. A method according to Claim 9, **characterised in that** a dipping bath is used in the solvent impregnation in step b) (2).

11. A method according to one of the preceding claims, **characterised in that** after step b) (2) the semi-finished fibre-composite product (12) is deposited, especially rolled up, in a step c) (3).

## Revendications

1. Procédé de fabrication d'un produit semi-fini composite fibreux (12) ce produit semi-fini composite fibreux (12) renfermant des fibres de carbone (10) et un matériau formant matrice (11), et se présentant sous la forme d'un ruban d'une bande ou d'un faisceau de fibres (Tow), **caractérisé en ce qu'**
il comporte les étapes suivantes consistant à :
a) fabriquer les fibres de carbone (10), et
b) appliquer le matériau formant matrice (11) sur les fibres de carbone (10) non modifiées, l'étape b) (2) étant mise en oeuvre directement après l'étape a) (1) sans autre étape de traitement intermédiaire.

2. Procédé conforme à la revendication 1,
**caractérisé en ce qu'**
on utilise un matériau formant matrice (11) thermoplastique et/ou thermodurcissable et/ou élastomère, et, lors de l'application de ce matériau formant matrice (11) lors de l'étape b) (2) on utilise une imprégnation à l'état fondu.

3. Procédé conforme à la revendication 2,
**caractérisé en ce que**
lors de l'étape b) (2) le matériau formant matrice thermoplastique (11) est préparé pour permettre l'imprégnation à l'état fondu par une extrudeuse (20) en particulier une extrudeuse (20) ayant une buse à fente large (21).

4. Procédé conforme à la revendication 2,
**caractérisé en ce que**
lors de l'étape b) (2) le matériau formant matrice thermodurcissable (11) est préparé par une installation de mélange mélangé.

5. Procédé conforme à la revendication 1,
**caractérisé en ce que**
lors de l'application du matériau formant matrice (11) lors de l'étape b) (2) on utilise une imprégnation par poudre.

6. Procédé conforme à la revendication 1,
**caractérisé en ce que**
lors de l'application du matériau formant matrice (11) lors de l'étape b) (2) on utilise une imprégnation par film.

7. Procédé conforme à l'une des revendications 1 à 6,
**caractérisé en ce que**
lors de l'étape b) (2) pour permettre une fusion du matériau formant matrice (11) on utilise de la chaleur résiduelle se formant pendant l'étape a) (1) lors de la fabrication (1) des fibres de carbone (10).

8. Procédé conforme à la revendication 7,
**caractérisé en ce que**
la chaleur résiduelle est fournie au moins en partie par les fibres de carbone (10).

9. Procédé conforme à la revendication 1,
**caractérisé en ce que**
lors de l'application du matériau formant matrice (11) lors de l'étape b) (2) on utilise une imprégnation par solvant.

10. Procédé conforme à la revendication 9,
**caractérisé en ce que**
lors de l'imprégnation par solvant pendant l'étape b) (2) on utilise un bain d'immersion.

11. Procédé conforme à l'une des revendications précédentes,
**caractérisé en ce que**
après l'étape b) (2), lors d'une étape c) (3) on dépose le produit semi-fini composite fibreux (12) et en particulier on l'enroule.
